# EUROPEAN PATENT APPLICATION

(11) **EP 4 113 466 A1**
(43) Date of publication of application: **04.01.2023**
(21) Application number: 21182365.3
(22) Date of filing: 29.06.2021
(51) Int. Cl.: G07C 9/00, G07C 9/20, G07C 9/22, H04M 11/02, H04N 7/18

(54) **METHOD AND SYSTEM FOR CONTROLLING UNLOCKING OF AN ENTRANCE OF A MULTI-FAMILY RESIDENTIAL**

(71) Applicant: Zesec of Sweden AB, 411 36 Göteborg (SE)
(72) Inventor: Rejmell, Thomas A, 421 56 Västra Frölunda (SE)
(74) Representative: AWA Sweden AB

(57) **Abstract**

The present disclosure relates to method (100) for controlling unlocking of an entrance of a multi-family residential and a system thereof. The method (100) comprising: receiving (S302) a request for unlocking the entrance from a first portable communication device associated with a visitor, wherein the request comprises data identifying the visitor, transmitting (S304) a list of residents to the first portable communication device associated with the visitor, receiving (S306), from the first portable communication device associated with the visitor, an indication of a resident to contact, determining (S308) metadata associated with the visitor, based on the data identifying the visitor and a date and time of the request, if predetermined preferences of the indicated resident match the metadata associated with the visitor, establishing (S310) a connection between the first portable communication device associated with the visitor and a second portable communication device associated with the indicated resident, and upon receiving an authorization from the second portable communication device associated with the resident, unlocking (S312) the entrance.

## Description

### Technical field

The present invention relates to access management of buildings and houses. More particularly, it relates to a method and system for controlling unlocking of an entrance of a multi-family residential.

### Background of the invention

Today, more and more people live in multi-family residentials, such as apartment complexes. These residential buildings often have locked entrances for privacy and security of the residents. However, this comes with the side-effect of making it more complex for visitors to these residential buildings.

A common sight at these buildings are intercom systems provided at the entrance of the building. With these intercom systems, a visitor is able to choose among a list of residents and then call them over the intercom system to ask them to open the entrance. However, there are limitations with today's technology and thus room for improvements within this field.

### Summary of the invention

In view of the above, it is an object of the present invention to provide a method and system for controlling unlocking of an entrance of a multi-family residential.

It is a further object of the present invention to accomplish a balance between the privacy and security of the residents of a multi-family residential and an efficiency for a visitor to easily gain access.

It has been realized that by the proposed method and system thereof, a more secure and efficient way of managing access to a shared building is achieved.

According to a first aspect, a method for controlling unlocking of an entrance of a multi-family residential is provided. The method comprises: receiving a request for unlocking the entrance from first portable communication device associated with a visitor, wherein the request comprises data identifying the visitor, transmitting a list of residents to the first portable communication device associated with the visitor, receiving, from the first portable communication device associated with the visitor, an indication of a resident to contact, determining metadata associated with the visitor, based on the data identifying the visitor and a date and time of the request, if predetermined preferences of the indicated resident match the metadata associated with the visitor, establishing a connection between the first portable communication device associated with the visitor and a second portable communication device associated with the resident, upon receiving an authorization from the second portable communication device associated with the resident, unlocking the entrance.

By the term "multi-family residential" it is hereby meant any building or community having a plurality of residents with a shared entrance. For example, the multi-family residential may be an apartment complex, a mixed-use building, or a housing cooperative.

By the term "determining metadata associated with the visitor" it is hereby meant formatting the available information into a predetermined set of parameters. The metadata may furthermore be formatted to enable an efficient comparison of the metadata with the predetermined preferences of the indicated resident.

Establishing the connection between the first portable communication device and the second portable communication device may comprise setting up an audio and/or video link. In other words, a phone call or video call may be set up between the first portable communication device and the second portable communication device.

The first and/or second portable communication device may e.g. be a smart phone comprising an app configured to receive, transmit and present the relevant information.

An advantage of the provided method is that only residents that the visitor may want to contact, and which the visitor is allowed to contact are presented. Thus, achieving a technical effect of a more effective and secure way of transmitting and presenting potentially sensitive information while managing access to the multi-family residential.

The data identifying the visitor may comprise name, phone number, reason for unlocking and/or authorization.

The name and/or phone number may be used to match with a contact list of the residents. A reason for unlocking and/or authorization may be used to match with predetermined preferences of the indicated resident. Further, this provides for a more secure process in that anonymous calls are reduced since data identifying the visitor is obtained.

The list of residents may consist of residents with predetermined preferences that match the metadata associated with the visitor. An advantage of which is that only residents relevant for the visitor is presented. The process of contacting the right person may thus be performed more effectively in that less information is transmitted and presented. Further, it allows for an effective way of contacting specific persons in a household as opposed to traditional intercoms. Even further, it provides more privacy for the residents in that they may only be seen and contacted by visitors matching their predetermined preferences.

The predetermined preferences may comprise time periods when the resident is able to be contacted.

Thereby, a do-not-disturb time period may be set by the resident, e.g. during the night, to increase their privacy.

The predetermined preferences may comprise a list of visitors that are able to contact the resident.

Thereby, the privacy of the resident is further improved.

According to a second aspect, a system for controlling unlocking of an entrance of a multi-family residential is presented. The system comprises: a controller communicatively connected to the entrance, for controlling unlocking of the entrance, a server communicatively connected to the controller, wherein the server comprises circuitry configured to execute: an obtaining function configured to obtain a request for unlocking the entrance from a first portable communication device associated with a visitor, wherein the request comprises data identifying the visitor, a transmitting function configured to transmit a list of residents to the first portable communication device, and in response to transmitting the list of residents, the obtaining function is further configured to obtain a resident to contact from the first portable device, a determining function, configured to determine metadata associated with the visitor, based on the data identifying the visitor and a date and time of the request, a communication function, configured to, if predetermined preferences of the resident matches the metadata associated with the visitor, establish a connection between the first portable communication device and a second portable communication device associated with the indicated resident, and an unlocking function configured to, upon a request from the second portable communication device, transmit an authorization of unlocking the entrance to the controller.

An advantage of the provided system is that a more cost-effective solution is achieved compared to the traditional intercom system. It further requires a less complicated installation.

Even further, the system needs no parts provided on the outside of the entrance. Thus, the system can be more reliable since it can be protected from the outdoor environment and/or vandalism.

Additionally, only a list of residents that the first portable communication device associated with the visitor may want to contact, and which allow themselves to be contacted are transmitted. Thus, achieving a technical effect of a more effective and secure way of transmitting and presenting potentially sensitive information while managing access to the multi-family residential.

The system may further comprise an identification arranged in proximity to the entrance. The first portable communication device may be further configured to transmit the identification with the request for unlocking the entrance.

Thereby, a system comprising a server communicatively connected to several controllers may more easily determine which controller the first portable communication device associated with the visitor is requesting unlocking of an entrance from.

This further increases the security of the system, in that only a first portable communication device associated with the visitor with access to the identification in proximity to the entrance may request unlocking of the entrance. Thereby, e.g. prank calls from a distance may no longer be made, which further increases e.g. traceability of each request.

The identification may be a scannable code or tag configured to be scanned by the first portable communication device. Upon scanning the scannable code or tag the first portable communication device may transmit the request for unlocking the entrance.

A scannable code or tag is a simple way to identify the entrance that further simplifies the process for unlocking the entrance. Additionally, a scannable code or tag is closely tied to the position of the entrance in that they may be difficult to scan from a distance.

The list of residents may be encrypted. The circuitry may be further configured to execute a decryption function, configured to decrypt at least a portion of the list based on the data identifying the visitor.

Thereby, the privacy of the residences is further increased. Decrypting at least a portion of the list based on the data identifying the visitor may comprise only decrypting residents which predetermined preferences match the data identifying the visitor, e.g. having a name or an authorization pre-approved by the resident. For example, only a portion of the residents may allow their info to be seen by salespeople.

The data identifying the visitor may comprise name, phone number, reason for unlocking and/or authorization.

A reason for unlocking may be food delivery, visit or emergency services. An authorization may e.g. identify a food delivery person as such according to a predetermined database.

The list of residents may consist of residents with predetermined preferences that match the metadata associated with the visitor.

Thereby, only residents relevant for the visitor is presented. The process of contacting the right person may thus be performed more effectively in that less information is transmitted and presented. Further, it allows for an effective way of contacting specific persons in a household as opposed to traditional intercoms. Even further, it provides more privacy for the residents in that they may only be seen and contacted by visitors matching their predetermined preferences.

The predetermined preferences may comprise time periods when the resident is able to be contacted.

Thereby, a do-not-disturb time period may be set by the resident, e.g. during the night, to increase their privacy.

The predetermined preferences may comprise a list of persons that are able to contact the resident.

Thereby, the privacy of the resident is further improved.

According to a third aspect, a non-transitory computer-readable storage medium having stored thereon instructions for implementing the method according to the first aspect, when executed on a device having processing capabilities, is provided.

The above-mentioned features and advantages of the first aspect, when applicable, apply to the second, third and fourth aspects as well. To avoid undue repetition, reference is made to the above.

Still other objectives, features, aspects, and advantages of the invention will appear from the following detailed description as well as from the drawings. The same features and advantages described with respect to one aspect are applicable to the other aspects unless explicitly stated otherwise.

### Brief description of the drawings

The above and other aspects of the present inventive concept will now be described in more detail, with reference to appended drawings showing variants of the invention. The figures should not be considered limiting the invention to the specific variant; instead they are used for explaining and understanding the inventive concept.

As illustrated in the figures, the sizes of layers and regions are exaggerated for illustrative purposes and, thus, are provided to illustrate the general structures of variants of the present inventive concept. Like reference numerals refer to like elements throughout.
Fig. 1 illustrates, by way of example, a system for controlling unlocking of an entrance of a multi-family residential.
Fig. 2 schematically illustrates, by way of example, a server as a part of the system for controlling unlocking of an entrance of a multi-family residential.
Fig. 3 is a flow chart illustrating the steps of a method for controlling unlocking of an entrance of a multi-family residential.

### Detailed description

The present inventive concept will now be described more fully hereinafter with reference to the accompanying drawings, in which currently preferred variants of the inventive concept are shown. This inventive concept may, however, be implemented in many different forms and should not be construed as limited to the variants set forth herein; rather, these variants are provided for thoroughness and completeness, and fully convey the scope of the present inventive concept to the skilled person.

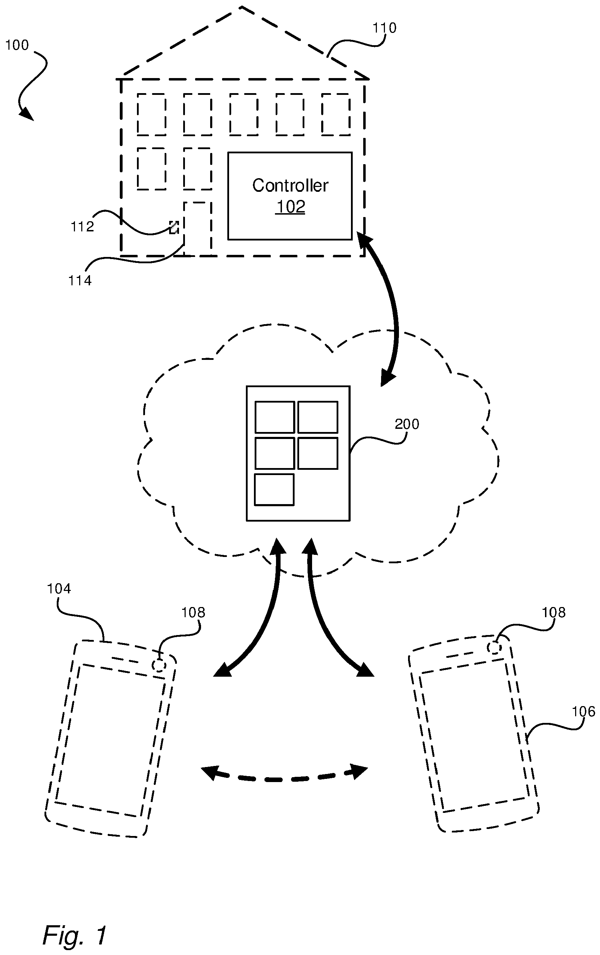

A method for controlling unlocking of an entrance of a multi-family residential, as well as a system thereof, will now be described with reference to Fig. 1 to Fig. 3.

Fig. 1 schematically illustrates a system 100 for controlling unlocking of an entrance 114 of a multi-family residential 110. The multi-family residential 110 may be an apartment complex. The entrance 114 may be a front door of the multi-family residential 110 as illustrated herein. Alternatively, the entrance 114 may be a gate to a residential area.

The system 100 comprises a controller 102. The controller 102 may be communicatively connected to the entrance 114. More specifically, the controller 102 may be communicatively connected to a controllable lock of the entrance 114, such as an electronic lock. The controller 102 may be configured to control the electronic lock using electronic signals. The controller 102 may further be configured to e.g., upon receiving a control signal to lock or unlock the entrance 114, turn a handle to move a latch or deadbolt of a conventional lock. Put differently, the controller 102 may be configured to control unlocking of the entrance 114. The controller 102 may be provided at the entrance 114.

The system 100 further comprises a server 200. The server 200 may be communicatively connected to the controller 102. The server 200 may instruct the controller 102 to lock or unlock the entrance 114. The server 200 may be provided as a remote server. As an example, the server 200 can be provided as a cloud-based service.

The server 200 may communicate with the controller 102 over secure wireless communication. As non-limiting examples, the server 200 and the controller 102 may communicate over a mobile network (e.g. 3G, 4G (LTE), 5G, or the like) or a Wi-Fi network. Alternatively, the server 200 may be provided as part of the controller 102, or vice versa.

The server 200 may communicate with a first portable communication device 104. The first portable communication device 104 may be associated with a visitor. The first portable communication device 104 may be a smart phone, a tablet, a smart watch, or the like. The first portable communication device 104 may comprise a camera 108.

The server 200 may communicate with a second portable communication device 106. The second portable communication device 106 may be associated with a resident of the multi-family residential 110. The second portable communication device 106 may be a smart phone, a tablet, a smart watch, or the like. The second portable communication device 106 may comprise a camera 108.

In an alternative embodiment, the second portable communication device 106 may be a non-portable device provided in the resident's home. For example. it may be any device suitable for communicating with the first portable communication device 104 over audio and/or video, such as smart home hub, a Google Nest Hub, a computer, or the like.

The server 200 may establish a connection, illustrated as a dashed arrow, between the first portable communication device 104 and the second portable communication device 106. The server 200 may for example set up a phone call or a video call between the first portable communication device 104 and the second portable communication device 106. In the case of a video call, a camera 108 of the first portable communication device 104 may be used for the resident to identify the visitor.

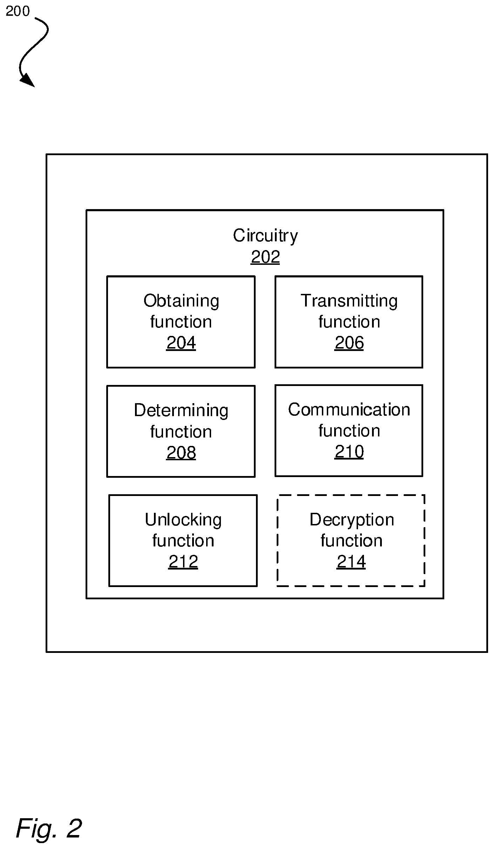

The server 200 is further described in connection with Fig. 2.

The system 100 may further comprise an identification 112 arranged in proximity to the entrance 114. As non-limiting examples, the identification 112 may be provided on the entrance, or on a wall next to the entrance. The identification 112 may be a scannable code or tag configured to be scanned by the first portable communication device 104. The identification 112 may be a two-dimensional optical code. For example, the identification 112 may be a QR-code. The act of scanning may comprise scanning the identification 112 using the camera 108 of the first portable electronic device 104. Alternatively, the identification 112 may be a Near-Field Communication, NFC, tag. Alternatively, the identification 112 may be a Radio Frequency Identification, RFID, tag. The act of scanning the identification 112 may comprise reading the identification 112 using an NFC or RFID tag reader of the first portable communication device 104.

The identification 112 may allow the server 200 to verify that the first portable communication device 104 is located at the entrance 114. The identification 112 may allow the first portable communication device 104 to establish a connection with the server 200 over which the first portable communication device 104 can transmit a request for unlocking the entrance 114.

Objects illustrated in dashed lines should be interpreted as either not being part of the system 100, or optionally being part of the system 100.

The thick arrows illustrated herein should be interpreted as ways of communications.

Fig. 2 schematically illustrates the server 200 as previously discussed in connection with Fig. 1.

The server 200 may comprise circuitry 202 configured to execute functions of the system as discussed in connection with Fig. 1.

The circuitry 202 may be configured to execute an obtaining function 204 configured to obtain a request for unlocking the entrance from a first portable communication device associated with a visitor. The request may comprise data identifying the visitor. The request may further comprise the identification arranged in proximity to the entrance.

The circuitry 202 may be configured to execute a transmitting function 206 configured to transmit a list of residents to the first portable communication device. The list of residents may consist of residents with predetermined preferences that match the metadata associated with the visitor.

In response to transmitting the list of residents, the obtaining function 204 may be further configured to obtain a resident to contact, from the first portable device. The obtaining function 204 may be configured to obtain an indication of a resident to contact, e.g. a selection from the list of residents transmitted by the transmitting function.

The circuitry 202 may be configured to execute a determining function 208, configured to determine metadata associated with the visitor. The metadata may be determined based on the data identifying the visitor. Alternatively, or in combination with above, the metadata may be determined based on a date of the request. Alternatively, or in combination with above, the metadata may be determined based on a time of the request. Alternatively, or in combination with above, the metadata may be determined based on one or more of the data identifying the visitor, the time of the request and the date of the request.

The metadata may comprise information about the visitor. The metadata may comprise information about the nature of the visit. The metadata may comprise information about the time of the visit, the day of the week of the visit and/or the date of the visit. Put differently, the metadata may comprise any information that may be relevant when determining which resident or residents the visitor is able to contact.

The circuitry 202 may be configured to execute a communication function 210. The communication function may be configured to establish a connection between the first portable communication device and a second portable communication device associated with the indicated resident. The communication function may be configured to establish the connection only if predetermined preferences of the resident matches the metadata associated with the visitor.

The predetermined preferences may comprise time periods when the resident is able to be contacted. For example, during daytime, only evenings during weekdays, only daytime during weekends or the like. Alternatively, or in combination with above, the predetermined preferences may comprise a list of persons that are able to contact the resident.

The circuitry 202 may be configured to execute an unlocking function 212. The unlocking function 212 may be configured to transmit an authorization of unlocking the entrance to the controller. The unlocking function 212 may be configured to transmit the authorization upon a request from the second portable communication device.

The list of residents may be encrypted. The circuitry 202 may be further configured to execute a decryption function 214, configured to decrypt at least a portion of the list based on the data identifying the visitor. The decryption function 214 may be configured to decrypt at least a portion of the list upon receiving a passcode from the first portable communication device. The decryption function 214 may be configured to decrypt at least a portion of the list upon receiving further data identifying the visitor, such as allowing access to a contact list for additional verification.

The decryption function 214 may be configured to decrypt at least a portion of the list upon receiving an indication of a resident of the multi-family residential, the portion relating to the indicated resident. For example, upon receiving the name of a resident the portion of the list relating to that resident may be decrypted.

The data identifying the visitor may comprise name, phone number, reason for unlocking and/or authorization. The reason for unlocking may be the reason why the visitor wants to come in contact with the resident, i.e. what the nature of the visit is. For example, the visitor may be a salesperson, and thus the reason may be sales meeting. As another example, the visitor may be a contractor or craftsman who needs access to the building in order to perform work.

The predetermined preferences of the resident may further comprise a list of reasons for unlocking that allows or disallows the resident to be contacted, such as always allowing contractors to contact the resident but not allowing salespeople.

An authorization of the visitor may be associated with persons which routinely has access to the building as part of their job or role. For example, a caretaker, a postman or the like. An authorization may further be associated with persons with special access for security or emergency reasons, such as a police officer or fire fighter.

Upon the circuitry 202 receiving a request for unlocking the entrance from a visitor with such an authorization, i.e. an authorization independent of the residents of the multi-family residential, the circuitry 202 may be configured to directly execute the unlocking function 212 without executing the transmitting function 206, the determining function 208 and/or the communication function 210.

The server 200 may be configured to carry out overall control of functions and operations of the system as previously described in relation to Fig. 1. The server 200 may include a processor, such as a central processing unit (CPU), microcontroller, or microprocessor. The processor may be part of the circuitry. The processor may be configured to execute program code stored in the memory, in order to carry out functions and operations of the system. The memory may be one or more of a buffer, a flash memory, a hard drive, a removable media, a volatile memory, a non-volatile memory, a random access memory (RAM), or another suitable device. In a typical arrangement, the memory may include a non-volatile memory for long term data storage and a volatile memory that functions as system memory for the circuitry 202. The memory may exchange data with the processor over a data bus. Accompanying control lines and an address bus between the memory and the processor also may be present.

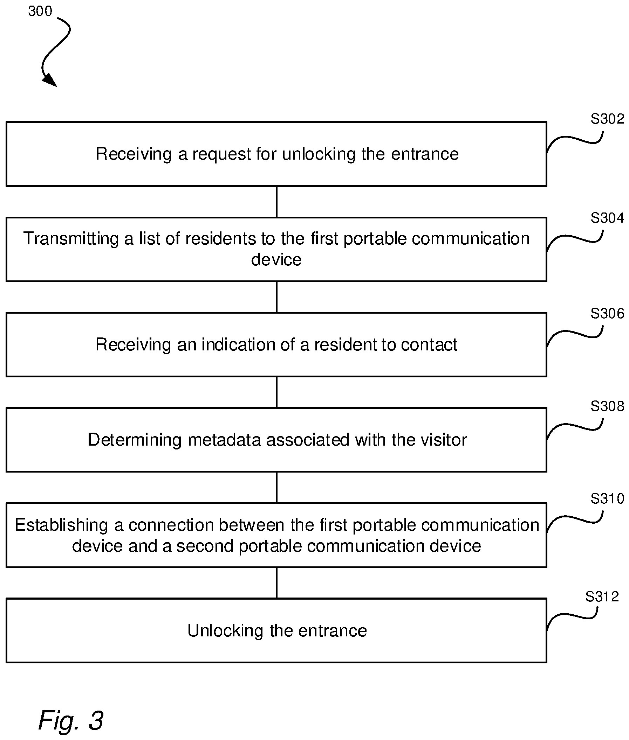

Functions and operations of the server 200 may be embodied in the form of executable logic routines (e.g., lines of code, software programs, etc.) that are stored on a non-transitory computer readable recording medium (e.g., the memory) of the server 200 and are executed by the processor. Furthermore, the functions and operations of the server 200 may be a stand-alone software application or form a part of a software application that carries out additional tasks related to the server 200. The described functions and operations may be considered a method that the corresponding device is configured to carry out. Such as the method 300 discussed below in connection with Fig. 3. Also, while the described functions and operations may be implemented in software, such functionality may as well be carried out via dedicated hardware or firmware, or some combination of hardware, firmware and/or software.

Fig. 3 is a flow chart illustrating steps of a method 300 for controlling unlocking of an entrance of a multi-family residential. Below, the different steps is described in more detail. Even though illustrated in a specific order, the steps of the method 300 may be performed in any suitable order, in parallel, as well as multiple times.

A request for unlocking the entrance is received S302, by a server, from a first portable communication device associated with a visitor. The request may comprise data identifying the visitor.

A list of residents is transmitted, by the server, S304 to the first portable communication device associated with the visitor. The list of residents may be a list of all residents of the multi-family residential. Alternatively, the list of residents may be a part of the residents of the multi-family residential.

An indication of a resident to contact is received, by the server, S306 from the first portable communication device associated with the visitor. The indicated resident may be part of the list of residents.

Metadata associated with the visitor is determined, by the server, S308, based on the data identifying the visitor and a date and time of the request.

A connection between the first portable communication device associated with the visitor and a second portable communication device associated with the resident is established S310, by the server, if predetermined preferences of the indicated resident match the metadata associated with the visitor.

The entrance is unlocked S312, by a controller controlled by the server. The act of unlocking the entrance is performed upon the server receiving an authorization from the second portable communication device associated with the resident.

The data identifying the visitor may comprise name, phone number, reason for unlocking and/or authorization.

The list of residents may consist of residents with predetermined preferences that match the metadata associated with the visitor.

The predetermined preferences may comprise time periods when the resident is able to be contacted.

The predetermined preferences comprise a list of persons that are able to contact the resident.

Additionally, variations to the disclosed variants can be understood and effected by the skilled person in practicing the claimed invention, from a study of the drawings, the disclosure, and the appended claims.

## Claims

1. A method (300) for controlling unlocking of an entrance of a multi-family residential, the method (300) comprises:
receiving (S302) a request for unlocking the entrance from a first portable communication device associated with a visitor, wherein the request comprises data identifying the visitor;
transmitting (S304) a list of residents of the multi-family residential to the first portable communication device;
receiving (S306), from the first portable communication device, an indication of a resident to contact;
determining (S308) metadata associated with the visitor, based on the data identifying the visitor and a date and time of the request;
if predetermined preferences of the indicated resident match the metadata associated with the visitor, establishing (S310) a connection between the first portable communication device and a second portable communication device associated with the indicated resident; and
upon receiving an authorization from the second portable communication device, unlocking (S312) the entrance.

2. The method (300) according to claim 1, wherein the data identifying the visitor comprises name, phone number, reason for unlocking and/or authorization.

3. The method (300) according to any one of the preceding claims, wherein the list of residents consists of residents with predetermined preferences that match the metadata associated with the visitor.

4. The method (300) according to any one of the preceding claims, wherein the predetermined preferences comprise time periods when the resident is able to be contacted.

5. The method (300) according to any one of the preceding claims, wherein the predetermined preferences comprise a list of visitors that are able to contact the resident.

6. A system (100) for controlling unlocking of an entrance (114) of a multi-family residential (110), the system (100) comprising:
a controller (102) communicatively connected to the entrance (114), for controlling unlocking of the entrance (114);
a server (200) communicatively connected to the controller (102),
wherein the server (200) comprises circuitry (202) configured to execute:
an obtaining function (204) configured to obtain a request for unlocking the entrance (114) from a first portable communication device (104) associated with a visitor, wherein the request comprises data identifying the visitor;
a transmitting function (206) configured to transmit a list of residents of the multi-family residential to the first portable communication device (104), and in response to transmitting the list of residents, the obtaining function (204) is further configured to obtain a resident to contact from the first portable device (104);
a determining function (208) configured to determine metadata associated with the visitor based on the data identifying the visitor and a date and time of the request;
a communication function (210) configured to, if predetermined preferences of the resident matches the metadata associated with the visitor, establish a connection between the first portable communication device (104) and a second portable communication device (106) associated with the indicated resident; and
an unlocking function (212) configured to, upon a request from the second portable communication device (106), transmit an authorization of unlocking the entrance (114) to the controller (102).

7. The system (100) according to claim 6, wherein the system (100) further comprises an identification (112) arranged in proximity to the entrance (114), wherein the first portable communication device (104) is further configured to transmit the identification with the request for unlocking the entrance (114).

8. The system (100) according to claim 6 or 7, wherein the identification (112) is a scannable code or tag configured to be scanned by the first communication device (104).

9. The system (100) according to any one of the claims 6 to 8, wherein the list of residents is encrypted, and the circuitry (202) is further configured to execute a decryption function (214), configured to decrypt at least a portion of the list based on the data identifying the visitor.

10. The system (100) according to any one of the claims 6 to 9, wherein the data identifying the visitor comprises name, phone number, reason for unlocking and/or authorization.

11. The system (100) according to any one of the claims 6 to 10, wherein the list of residents consists of residents with predetermined preferences that match the metadata associated with the visitor.

12. The system (100) according to any one of the claims 6 to 11, wherein the predetermined preferences comprise time periods when the resident is able to be contacted.

13. The system (100) according to any one of the claims 6 to 12, wherein the predetermined preferences comprise a list of visitors that are able to contact the resident.

14. A non-transitory computer-readable storage medium having stored thereon instructions for implementing the method (300) according to any one of the claims 1 to 5, when executed on a device having processing capabilities.

## Amended claims

### Amended claims in accordance with Rule 137(2) EPC.

1. A method (300) for controlling unlocking of an entrance of a multi-family residential, the method (300) comprises:
receiving (S302) a request for unlocking the entrance from a first portable communication device associated with a visitor, wherein the request comprises data identifying the visitor;
transmitting (S304) a list of residents of the multi-family residential to the first portable communication device;
receiving (S306), from the first portable communication device, an indication of a resident to contact;
determining (S308) metadata associated with the visitor, based on the data identifying the visitor and a date and time of the request;
if predetermined preferences of the indicated resident match the metadata associated with the visitor, establishing (S310) a connection between the first portable communication device and a second portable communication device associated with the indicated resident; and
upon receiving an authorization from the second portable communication device, unlocking (S312) the entrance;
wherein the list of residents consists of residents with predetermined preferences that match the metadata associated with the visitor.

2. The method (300) according to claim 1, wherein the data identifying the visitor comprises name, phone number, reason for unlocking and/or authorization.

3. The method (300) according to any one of the preceding claims,
wherein the predetermined preferences comprise time periods when the resident is able to be contacted.

4. The method (300) according to any one of the preceding claims,
wherein the predetermined preferences comprise a list of visitors that are able to contact the resident.

5. A system (100) for controlling unlocking of an entrance (114) of a multi-family residential (110), the system (100) comprising:
a controller (102) communicatively connected to the entrance (114), for controlling unlocking of the entrance (114);
a server (200) communicatively connected to the controller (102),
wherein the server (200) comprises circuitry (202) configured to execute:
an obtaining function (204) configured to obtain a request for unlocking the entrance (114) from a first portable communication device (104) associated with a visitor, wherein the request comprises data identifying the visitor;
a transmitting function (206) configured to transmit a list of residents of the multi-family residential to the first portable communication device (104), and in response to transmitting the list of residents, the obtaining function (204) is further configured to obtain a resident to contact from the first portable device (104);
a determining function (208) configured to determine metadata associated with the visitor based on the data identifying the visitor and a date and time of the request;
a communication function (210) configured to, if predetermined preferences of the resident matches the metadata associated with the visitor, establish a connection between the first portable communication device (104) and a second portable communication device (106) associated with the indicated resident; and
an unlocking function (212) configured to, upon a request from the second portable communication device (106), transmit an authorization of unlocking the entrance (114) to the controller (102);
wherein the list of residents is encrypted, and the circuitry (202) is further configured to execute a decryption function (214), configured to decrypt at least a portion of the list based on the data identifying the visitor.

6. The system (100) according to claim 5, wherein the system (100) further comprises an identification (112) arranged in proximity to the entrance (114), wherein the first portable communication device (104) is further configured to transmit the identification with the request for unlocking the entrance (114).

7. The system (100) according to claim 5 or 6, wherein the identification (112) is a scannable code or tag configured to be scanned by the first communication device (104).

8. The system (100) according to any one of the claims 5 to 7, wherein the data identifying the visitor comprises name, phone number, reason for unlocking and/or authorization.

9. The system (100) according to any one of the claims 5 to 8, wherein the list of residents consists of residents with predetermined preferences that match the metadata associated with the visitor.

10. The system (100) according to any one of the claims 5 to 9,
wherein the predetermined preferences comprise time periods when the resident is able to be contacted.

11. The system (100) according to any one of the claims 5 to 10,
wherein the predetermined preferences comprise a list of visitors that are able to contact the resident.

12. A non-transitory computer-readable storage medium having stored thereon instructions for implementing the method (300) according to any one of the claims 1 to 4, when executed on a device having processing capabilities.
